# EUROPEAN PATENT APPLICATION

(11) **EP 4 624 216 A1**
(43) Date of publication of application: **01.10.2025**
(21) Application number: 25166503.0
(22) Date of filing: 27.03.2025
(51) Int. Cl.: B60K 17/04, F16H 57/08

(54) **A HUB REDUCTION UNIT OF AN AXLE**

(30) Priority: 28.03.2024 CZ 202441870 U
(71) Applicant: TATRA TRUCKS a.s., 742 21 Koprivnice (CZ)
(72) Inventor: Smolka, Radomir, 74258 Pribor (CZ); Dobrovolny, Petr, 75601 Hovezi (CZ); Jakubec, Josef, 74221 Koprivnice (CZ); Hinner, Zdenek, 74256 Sedlnice (CZ); Otisk, Dusan, 70800 Ostrava (CZ); Janovsky, Marek, 73801 Frydek-Mistek (CZ)
(74) Representative: Kendereski, Dusan

(57) **Abstract**

The present invention relates to a hub reduction unit of an axle, comprising a planetary gearbox and an input shaft (10), a knuckle (1) or a half-axle, and a wheel hub (5), all mechanically connected to the planetary gearbox. The planetary gearbox comprises a hub reduction central gear (9), at least two hub reduction pinions (15) pivotally arranged on hub reduction pinion pins (20) and in engagement with the hub reduction central gear (9), and an outer ring gear (29) in engagement with the hub reduction pinions (15). The input shaft (10) is mechanically connected via the hub reduction central gear (9) to the hub reduction pinions (15) and to the outer ring gear (29). Proximal to the plane of the planetary gearbox means towards the drive and distal to the plane of the planetary gearbox means towards the wheel, the plane of the planetary gearbox being the plane of the hub reduction central gear (9) perpendicular to the rotational axis of the hub reduction central gear (9). The outer ring gear (29) is mechanically connected to an outer ring gear holder (28) and to the knuckle (1) or the half-axle for capturing reaction forces of the hub reduction unit. The outer ring gear holder (28) and the knuckle (1) or the half-axle are arranged proximal to the plane of the planetary gearbox and arranged externally with respect to the input shaft (10) and co-axially with the input shaft (10). The planetary gearbox further comprises a planet carrier (38) rigidly connected to the reduction pinion (15) pins (20) and further to the wheel hub (5) such that the wheel hub (5) is arranged proximal to the plane of the planetary gearbox, externally with respect to the outer ring gear holder (28) and the knuckle (1) or the half-axle on bearings (2, 3) and co-axially with the outer ring gear holder (28) and the knuckle (1) or the half-axle on the bearings (2, 3). A first bearing (2) is mounted on the knuckle (1) or the half-axle and a second bearing (3) is mounted on the outer ring gear holder (28).

## Description

### Field of technology

This invention relates to a hub reduction unit of an axle, especially in combination with a drum or disc brake.

### Prior art

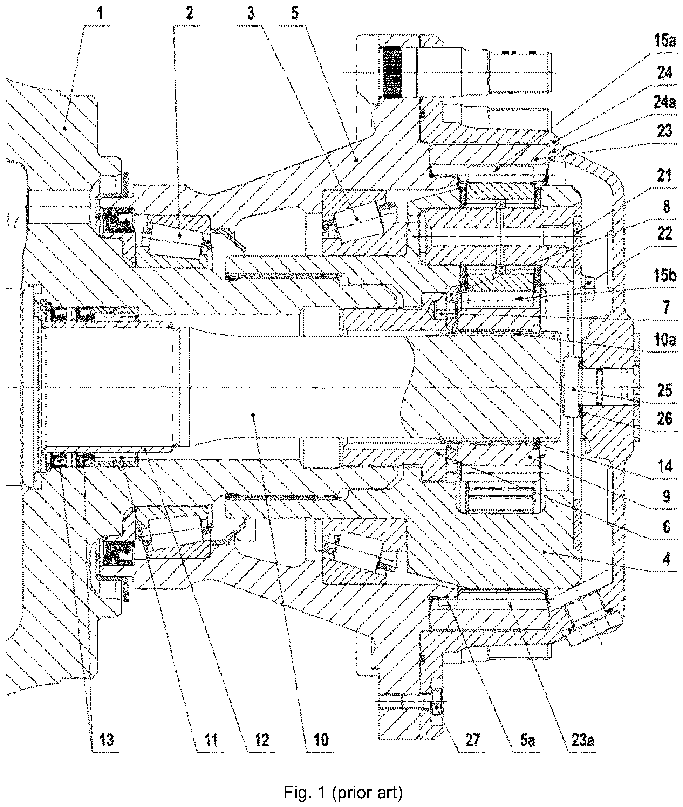

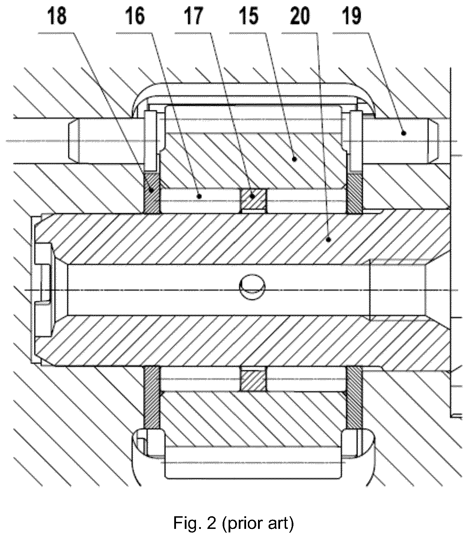

In the prior art, a known solution for an arrangement of a hub reduction unit of an axle in existing TATRA vehicles (see Fig. 1 and 2) is a hub reduction central gear (9) as the driving member and an outer ring gear (23) as the output member. A supporting element of the reduction unit is, in the case of steered axles, a knuckle (1) or, in the case of unsteered axles, a half-axle fitted with a spline into which a planet carrier (4) is inserted, and which serves to capture the reaction forces of the hub reduction unit. The planet carrier (4) houses the hub reduction pinions (15) of the planetary gear. The housing comprises loosely arranged needles (16) in two rows, which are separated by a spacer ring (17). The axial arrangement of the hub reduction pinions (15) consists in shims (18) which are secured against rotation by pins (19). The needles (16) are mounted on hub reduction pinion pins (20) press-fitted into the planet carrier (4). The arrangement allows the hub reduction pinions to undergo only rotational movement. For the distribution of oil to the fit of hub reduction pinions, the hub reduction pinion pins (20) have a bore hole in the axis into which a transverse hole drilled perpendicular to the axis of the pin enters. The ends of the pins (20) are fitted with a retaining plate (21) which is fixed to the planet carrier (4) by means of screws (22). The retaining plate (21) secures the pins (20) against possible rotation.

The wheel hub (5) is mounted by tapered roller bearings (2, 3), where a first (inner) bearing (2) is mounted on the knuckle (1) and a second (outer) bearing (3) on the planet carrier (4). The adjustment of the bearings is carried out by means of a locking screw (6) which is finely threaded and, by tightening it into the knuckle (1), the planet carrier (4) is retracted, and the bearings (2, 3) are axially adjusted. The bearing is secured against loosening by a pin (7) inserted into the hole in the locking screw (6) and a shaped shim (8) is fitted at the other end of the pin, which fits into a recess in the planet carrier (4). The washer (8) also forms the axial stop of the hub reduction central gear (9) from the inside. The wheel hub (5) is provided externally with a toothing (5a) into which a toothing (23a) of the outer ring gear (23) fits, which is also the toothing (23a) in engagement with a toothing (15a) of the hub reduction pinions (15).

The input shaft (10), preferably an input articulated shaft, is radially mounted in a needle bearing (11), the internal rotational path of which is formed by a sleeve (12) press-fitted on the input shaft (10), and it is centred in a gearing (15b) of the hub reduction pinions (15) via the hub reduction central gear (9). The connection of the hub reduction central gear (9) to the input shaft (10) is made possible by means of a spline (10a) at the end of the input shaft (10). The input shaft (10) is also provided with a groove for a retaining ring (14), which axially secures the hub reduction central gear (9) from the outside. Axially, the input shaft (10) is defined by a pin of a stopper (25) press-fitted into the hub reduction cover (24), where a defined axial clearance is set by means of distancing shims (26) inserted under the stop pin (25). The hub reduction cover (24) is connected to the wheel hub (5) by means of a screw (27) and also comprises machining which axially secures the outer ring gear (23). The input shaft (10) is sealed by two shaft seals (13), which are fitted between the knuckle (1) and the sleeve (12).

The greatest disadvantage of this concept is the change in the sense of rotation in the planetary gearbox and the need for appropriate compensation in the final drive. A further disadvantage is the placement of the hub reduction pinions (15), where due to the above concept the planet carrier (4) is stationary and thus one hub reduction pinion (15) is placed high above an oil level. The hub reduction pinion (15) is lubricated only by oil splashing, lubrication is problematic and the temperature of the oil increases.

In the US patent US 4424874 A, Fig. 4 of said document (the reference signs now being used according to said document) describes a hub reduction unit of an axle, comprising a planetary gearbox (26) and an input shaft (24), a half-axle (25) and a wheel hub (30) mechanically connected with the planetary gearbox (26). The planetary gearbox (26) comprises a hub reduction central gear (26h), at least two hub reduction pinions (26a) pivotally arranged on pins (26b) and in engagement with the hub reduction central gear (26h), and an outer ring gear (26d) in engagement with the hub reduction pinions (26a). The input shaft (24) is mechanically connected via the hub reduction central gear (26h) to the hub reduction pinions (26a) and to the outer ring gear (26d). By "proximal to the plane of the planetary gearbox", we understand "towards the drive" and by "distal to the plane of the planetary gearbox", we understand "towards the wheel". The outer ring gear (26d) is mechanically connected to the outer ring gear holder (31) and to the half-axle (25) via a flange (25a) to capture the reaction forces of the hub reduction unit. The outer ring gear holder (31) is arranged distal to the plane of the planetary gearbox and mounted externally to the wheel hub (30) and co-axially with the wheel hub (30). The flange (25a) of the half-axle and the half-axle (25) are arranged proximal to the plane of the planetary gearbox and arranged externally with respect to the input shaft (24) and co-axially with the input shaft (24). The planetary gearbox (26) further comprises a planet carrier (26c) rigidly connected to the pins (26b) of the hub reduction pinions (26a) and further to the wheel hub (30) such that the wheel hub (30) is arranged distal to the plane of the planetary gearbox and arranged internally with respect to and coaxially with the outer ring gear holder (31) on bearings (28, 29), wherein a first bearing (28) is arranged between the wheel hub (30) and the outer ring gear holder (31) and a second bearing (29) is arranged between the hub reduction pinion (26a) carrier (26c) and the outer ring gear holder (31). Proximal to the plane of the planetary gearbox and internally with respect to and co-axially with the flange (25a) of the half-axle, a disc brake (23) is arranged, wherein a brake support and brake linings (23e, 23f) are attached to the flange (25a) of the half-axle (25) and a brake disc (23d) is attached to a shaft (24) via a flange (23a). During braking, an inner brake lining and the brake disc (23d) make an axial movement towards an outer brake lining (23f), and this is a wet brake in oil, operated hydraulically.

One of the disadvantages of this arrangement is the arrangement of the disc brake internally with respect to the half-axle flange, i. e. the replacement of any brake component (e.g. brake lining in case of wear) requires disassembling the entire hub reduction unit.

A need therefore arises in the prior art and the aim of the invention is to provide a simpler hub reduction unit of an axle with the possibility of component unification (e. g. brakes).

### Summary of the invention

The above aim is achieved by a hub reduction unit of an axle, comprising a planetary gearbox and an input shaft, a knuckle or a half-axle, and a wheel hub, all mechanically connected to the planetary gearbox. The planetary gearbox comprises a hub reduction central gear, at least two hub reduction pinions pivotally arranged on the hub reduction pinion pins and in engagement with the hub reduction central gear, and an outer ring gear in engagement with the hub reduction pinions. The input shaft is mechanically connected via the hub reduction central gear to the hub reduction pinions and to the outer ring gear. Proximal to the plane of the planetary gearbox means towards the drive and distal to the plane of the planetary gearbox means towards the wheel. The plane of the planetary gearbox is the plane of the hub reduction central gear perpendicular to the rotational axis of the hub reduction central gear. The term 'knuckle' for steered axles is also understood in the context of this invention to comprise the half-axle' or 'swinging half-axle' for unsteered axles.

The outer ring gear is mechanically connected to an outer ring gear holder and to the knuckle or the half-axle for capturing reaction forces of the hub reduction unit. The outer ring gear holder and the knuckle or the half-axle are arranged proximal to the plane of the planetary gearbox and arranged externally with respect to the input shaft and co-axially with the input shaft. The planetary gearbox further comprises a planet carrier rigidly connected to the hub reduction pinion pins and further to the wheel hub such that the wheel hub is arranged proximal to the plane of the planetary gearbox, externally with respect to the outer ring gear holder and the knuckle or the half-axle on bearings and co-axially with the outer ring gear holder and the knuckle or the half-axle on the bearings. A first bearing is mounted on the knuckle or the half-axle, and a second bearing is mounted on the outer ring gear holder.

The underlying idea of the hub reduction unit of an axle according to this invention is that the hub reduction central gear remains the driving member, but the output member is the planet carrier. This change eliminates the inversion of the sense of rotation in the hub reduction unit. There is therefore no need to compensate for the change in rotation in the final drive, which has the same offset (offset of half-axles) for axles with and without the hub reduction unit. This change allows for greater unification of components and downstream units of the frame, steering, suspension, etc., and also takes into account new axle types (e.g. a hub reduction unit of an axle in combination with a disc brake). The lack of lubrication of the hub reduction pinion mountings has also been eliminated, as the entire planet carrier with the hub reduction pinions is now rotated. In the applicant's original invention, the planet carrier was stationary such that the planet carrier was only lubricated by spraying. Along with the lubrication, the problem with higher temperatures of the hub reduction unit is solved. Furthermore, a high variability of axle choice is enabled, as the invention retains a high degree of unification of the hub reduction unit components for individual solutions.

The size of the present hub reduction unit respects the already established drum brake and wheel range. The new planetary gearing concept increases gear ratio in the hub reduction unit, allowing the gear ratio in the final drive to be reduced, the gearing to be reduced and the vehicle ground clearance to be increased. The principle of the present hub reduction unit has a more favourable force distribution, which has a particularly positive effect on the service life of the hub reduction central gear compared to the original design. By changing the gear ratio, the torque through the input shaft is reduced, thus allowing the installation of a more powerful power unit or the removal of torque limitations. The unification also has implications for spare components and service work. The present hub reduction unit also allows the planet carrier to be removed without having to adjust the clearance of the wheel hub bearings when reassembling, which was not possible with the original invention, as the second (outer) tapered roller bearing was mounted on the stationary planet carrier.

In one alternative preferred embodiment, a drum brake is mounted proximal to the plane of the planetary gearbox, externally with respect to the wheel hub and co-axially with the wheel hub. A brake plate and brake shoes are attached to the knuckle or the half-axle, and a brake drum is attached to the wheel hub. The drum brake is therefore replaceable without disassembling the hub reduction unit.

In another alternative preferred embodiment, a disc brake is mounted proximal to the plane of the planetary gearbox, externally with respect to the wheel hub and co-axially with the wheel hub. A brake plate and brake pads are attached to the knuckle or the half-axle, and a brake disc is attached to the wheel hub. The brake pads of the disc brake is therefore replaceable without disassembling the hub reduction unit.

In a preferred embodiment, the planet carrier is rigidly connected to a hub reduction cover arranged distal to the plane of the planetary gearbox by means of a screw connection between the planet carrier and the hub reduction cover. Further, by means of a cut-out of each hub reduction pinion pin and a corresponding outer cylindrical protrusion of the hub reduction cover which fits into the cut-out, the pins are secured against possible rotation. The pins are press-fitted into the planet carrier. The planet carrier has an inner cylindrical hole into which an additional outer cylindrical protrusion of the hub reduction cover fits, thereby centring the hub reduction cover relative to the input shaft.

The hub reduction cover may be substantially circular in shape and may comprise the following cylindrical protrusions on the proximal side: an outer cylindrical protrusion serving as a locking element to secure the hub reduction pinion pins against rotation; an additional outer cylindrical protrusion for centring the hub reduction cover in the planet carrier; and an inner cylindrical protrusion in the form of a non-through cylindrical hole arranged in the centre of the hub reduction cover, for centring a friction plate used in unsteered axles and, in the case of an axle with a central tyre inflation system, for centring a tyre inflation pin. The outer cylindrical protrusion fits into the cut-outs in the hub reduction pinion pins, thereby securing the hub reduction pinion pins against rotation.

In a preferred embodiment, the input shaft of a steered axle is distally terminated with a locking nut for defining axial clearance of the input shaft. The locking nut and the hub reduction central gear may comprise correspondingly facing openings into which a second locking pin is inserted. A retaining ring may further be arranged around the circumference of the locking nut. Advantageously, the input shaft is axially defined without clearance. When the vehicle turns, only the longer shaft moves into the transfer case and the complicated adjustment of axial clearance is eliminated, as well as frictional contacts between the input shaft and a pin of a stopper, and between the hub reduction central gear and the friction plate (for steerable axles), thus eliminating additional heat sources. Axial fit is secured against loosening by inserting a second locking pin into the openings in the hub reduction central gear and the locking nut, and then securing it with a retaining ring. In the original invention, the input shaft was not axially defined, only the axial movement clearance was set, which represents increased labour during assembly by the need to set clearances and frictional contact with the stopper.

In a preferred embodiment, a locking screw for axial adjustment of the bearings is arranged proximal to the plane of the planetary gearbox, co-axially with the input shaft and between the input shaft and the knuckle or the half-axle with the outer ring gear holder. A head of the locking screw engages the outer ring gear holder. The head of the locking screw and the outer ring gear holder may comprise correspondingly facing openings into which a first locking pin is inserted.

In a preferred embodiment, the input shaft of a steered axle is furthermore radially mounted in a needle bearing arranged on the knuckle and axially mounted in axial bearings. A first axial bearing may be arranged in the knuckle and a second axial bearing may be arranged on the locking screw such that it rolls along a face of the hub reduction central gear.

In a preferred embodiment, a first friction plate is mounted between the locking screw and the hub reduction central gear of an unsteered axle for defining an internal axial stop of the hub reduction central gear (the first friction plate being in contact with the hub reduction central gear). Further, an input shaft stopper may be provided at a distal end of the input shaft and a second friction plate may be provided on the proximal side of the wheel hub reduction cover, opposite the input shaft stopper, for setting a defined axial clearance of the input shaft. The axial clearance of the shaft is not defined but is set to a defined value.

In a preferred embodiment, the hub reduction pinion is pivotally mounted on loose needles arranged in two rows on the hub reduction pinion pin. The rows are separated by a spacer ring. The hub reduction pinion may further be axially defined on each side by shims secured by third pins.

In a preferred embodiment, the hub reduction unit further comprises a central tyre inflation system (CTIS), wherein correspondingly facing central tyre inflation openings for the central tyre inflation pin are arranged in the hub reduction cover and the input shaft. The alignment of the openings is provided by centring the hub reduction cover by means of the planet carrier having an inner cylindrical opening into which the additional outer cylindrical protrusion of the hub reduction cover fits, thereby centring it.

In a preferred embodiment, the hub reduction unit further comprises a central tyre inflation system (CTIS), wherein a hub reduction cover comprises a central bore and an inner cylindrical protrusion, in which protrusion a rear axle tyre inflation hub or a front axle tyre inflation hub is centred. So as to prevent turning, the inflation hub comprises openings which receive screws during assembly, which screws are screwed into the hub reduction cover.

### Brief description of the drawings

Fig. 1 shows a longitudinal section of a hub reduction unit of an axle according to prior art.
Fig. 2 shows a longitudinal section of a hub reduction pinion arrangement according to prior art.
Fig. 3 shows a longitudinal section of a hub reduction unit of an axle according to the invention.
Fig. 4 shows a longitudinal section of a hub reduction pinion arrangement according to the invention.
Fig. 5 shows a longitudinal section of the hub reduction unit of an axle according to the invention, in an embodiment of a steered axle with a disc brake and a central tyre inflation system (variant 1).
Fig. 6 shows a frontal section of the planet carrier with pins and the hub reduction cover.
Fig. 7 shows a longitudinal section of the central tyre inflation pin.
Fig. 8 shows a longitudinal section of the hub reduction unit of an axle according to the invention, in an embodiment of an unsteered axle with a disc brake and without a central tyre inflation system.
Fig. 9 shows a longitudinal section of the hub reduction unit of an axle according to the invention, in an embodiment of a steered axle with a central tyre inflation system (variant 2).
Fig. 10 shows a longitudinal section of the hub reduction unit of an axle according to the invention, in an embodiment of an unsteered axle with a central tyre inflation system (variant 2).

### Examples

### Example 1

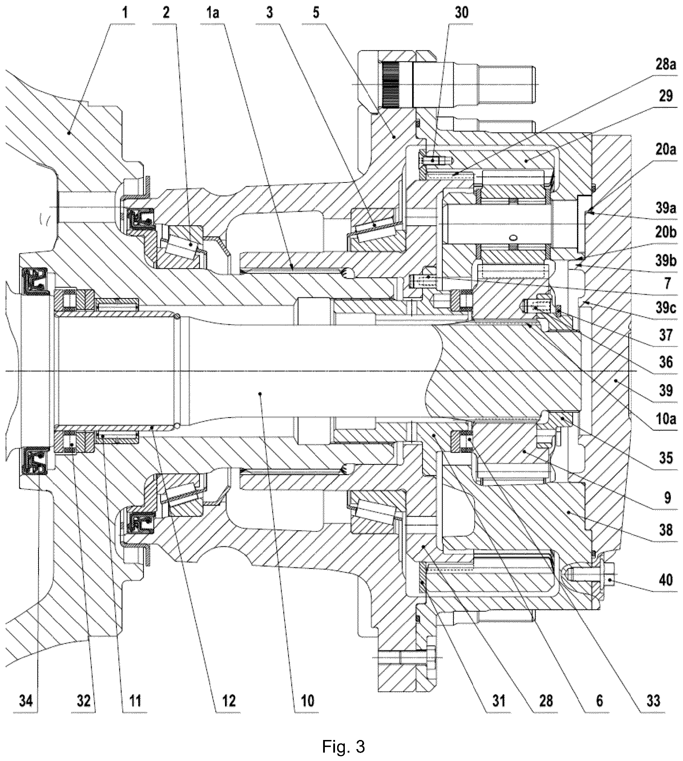

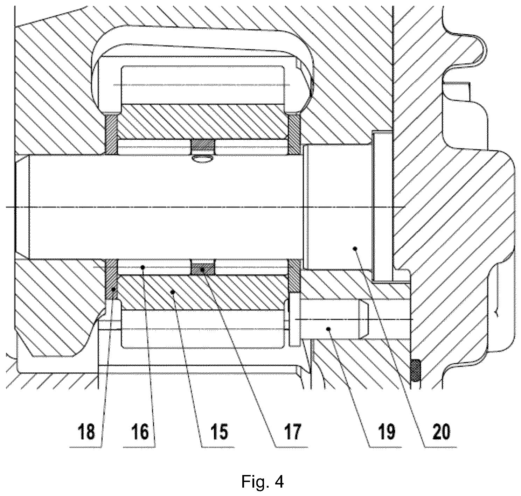

Fig. 3 and 4 show the hub reduction unit of an axle according to the invention.

The supporting element of the hub reduction unit remains the same, the knuckle 1 in the case of steered axles, or in the case of unsteered axles, the half-axle comprising spline 1a which captures reaction forces of the reduction unit. The knuckle 1 or the half-axle has modified dimensions, but the function remains the same as in the prior art (Fig. 1). An outer ring gear holder 28 is mounted on the spline 1a, wherein the outer diameter of the outer ring gear holder 28 comprises a spline 28a in which the outer ring gear 29 is mounted. The axial attachment of the outer ring gear is realized by means of a retaining plate 31 and screws 30.

The wheel hub 5 is mounted on bearings 2, 3, preferably tapered roller bearings, wherein a first (inner) bearing 2 is press-fitted on the knuckle 1 or the half-axle, and a second (outer) bearing 3 is press-fitted on the outer ring gear holder 28. The axial adjustment of the bearings 2, 3 is made possible by a fine threaded locking screw 6, which is tightened via the outer ring gear holder 28 to achieve the desired adjustment. To prevent loosening, a first locking pin 7 is inserted into the openings in the locking screw 6 and the outer ring gear holder 28. In the prior art (Fig. 1), the second bearing 3 is press-fitted onto the planet carrier 4 and the adjustment of the bearings 2, 3 is carried out by a finely threaded locking screw 6 which performs the same function, but its dimensions and shape are different. The original invention was secured by a frictional shaped shim 8, which is no longer present in the present invention. The bearings 2, 3, e. g. tapered roller bearings, are of different sizes but perform the same function.

The input shaft 10, e. g. an input articulated shaft, is radially mounted in a needle bearing 11 and, via the hub reduction central gear 9, in the gearing of the hub reduction pinions 15, wherein the inner orbit of the bearing is formed by a sleeve 12 press-fitted onto the input shaft 10. In the axial direction, the input shaft 10 is supported by axial bearings 32, 33. The hub reduction central gear 9 is connected to the input shaft 10 via a spline 10a at a distal end of the input shaft 10.

Axial clearance of the input shaft 10 and the hub reduction central gear 9 is determined by tightening the locking nut 35. By inserting a second locking pin 36 into the openings in the hub reduction central gear 9 and the locking nut 35, and then securing it with a retaining ring 37, the axial fit is secured against loosening.

According to prior art, the original invention does not comprise axial bearings 32, 33 at all. The input shaft 10 in the prior art is mounted with an axial clearance which is set by a stopper 25 in the hub reduction cover 24 (Fig. 1). The axial support of the hub reduction central gear 9 is implemented in the prior art arrangement by a friction plate 8 and a retaining ring 14 on the side of the hub reduction central gear 9 (Fig. 1), but the locking nut 35 with the second locking pin 36 is only comprised in the present invention.

In the prior art arrangement, the input shaft is sealed by means of shaft seals 13 (Fig. 1), the present hub reduction unit has a seal by means of a cassette seal 34 which is mounted in the knuckle 1 and sits on the machined diameter on the input shaft 10.

The planet carrier 38 is centred on the wheel hub 5, and houses five hub reduction pinions 15. The same number of hub reduction pinions is comprised in the prior art arrangement; however, where the hub reduction pinions were mounted in a stationary planet carrier 4 (Fig. 1). Similarly with the prior art arrangement (Fig. 2) and according to Fig. 4, the hub reduction pinions 15 are mounted in two rows on loose needles 16 spaced apart by a spacer ring 17. The axial alignment of the hub reduction pinions 15 is ensured on each side by shims 18, which are secured against rotation by third pins 19.

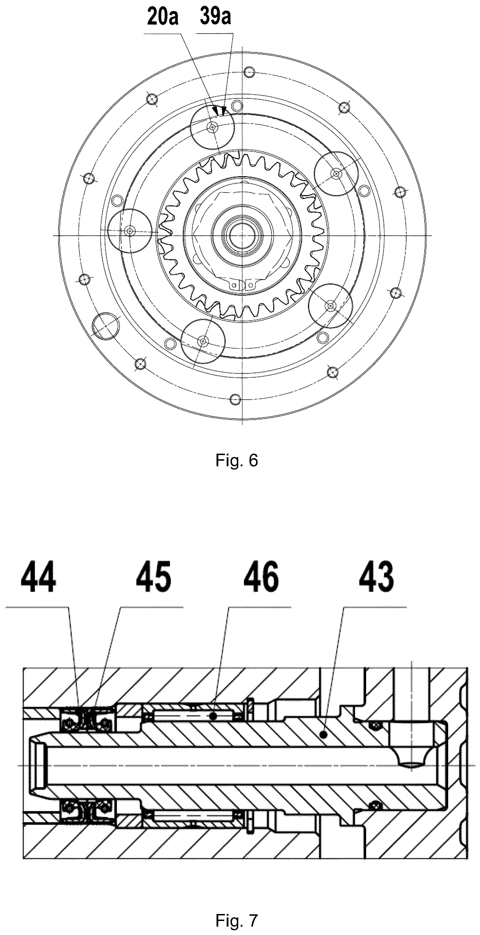

The supporting part of the planet carrier 15 is formed by pins 20 press-fitted into the planet carrier 38 and comprising cut-outs 20a on the outer face, wherein an outer cylindrical protrusion 39a on the hub reduction cover 39 fits into the cut-outs 20a, thereby securing the pins 20 against rotation. In a frontal view, the cut-out 20a has the shape of a circular section (a crescent, Fig. 6). The hub reduction cover 39 is connected to the planet carrier 38 by a screw connection 40, which enables it to undergo a joint rotation with the planet carrier 38. The planet carrier 38 also comprises an inner cylindrical opening 20b, into which an additional external cylindrical protrusion 39b fits for centring the hub reduction cover 39 in the planet carrier 38.

The principle of hub reduction pinion mounting remains identical to the prior art arrangement, wherein the shape, dimensions and material processing of the components have been modified. Compared to the present invention, the prior art arrangement comprises an additional retaining plate 21 fixed with screws 22, which secures the pins 20 of the hub reduction pinions 15 against rotation (Fig. 1).

### Example 2

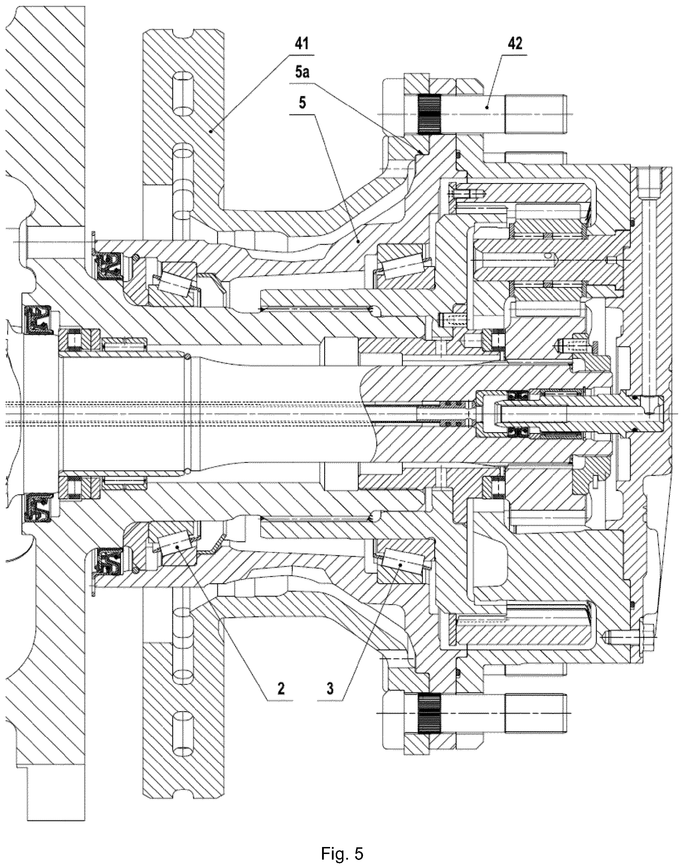

Fig. 5 shows the hub reduction unit of an axle according to the invention, in an embodiment of a steered axle with a disc brake and a central tyre inflation system (variant 1). In addition to the embodiment of Fig. 3 and Example 1, Fig. 5 shows the mounting of a brake disc 41 which is centred by a centring diameter 5a and secured to the wheel hub 5 by wheel bolts 42. The brake disc 41 is arranged above the mounting area of the bearings 2, 3. The hub reduction cover 39 is provided with a bore for a press-fit tyre inflation pin 43 which fits into seals 44, 45 and a radial bearing 46 arranged in the bore of the input shaft 10 (see Fig. 7). The tyre inflation pin 43 is centred by the internal cylindrical protrusion 39c of the hub reduction cover 39, in the form of a non-through cylindrical opening arranged in the centre of the hub reduction cover 39.

### Example 3

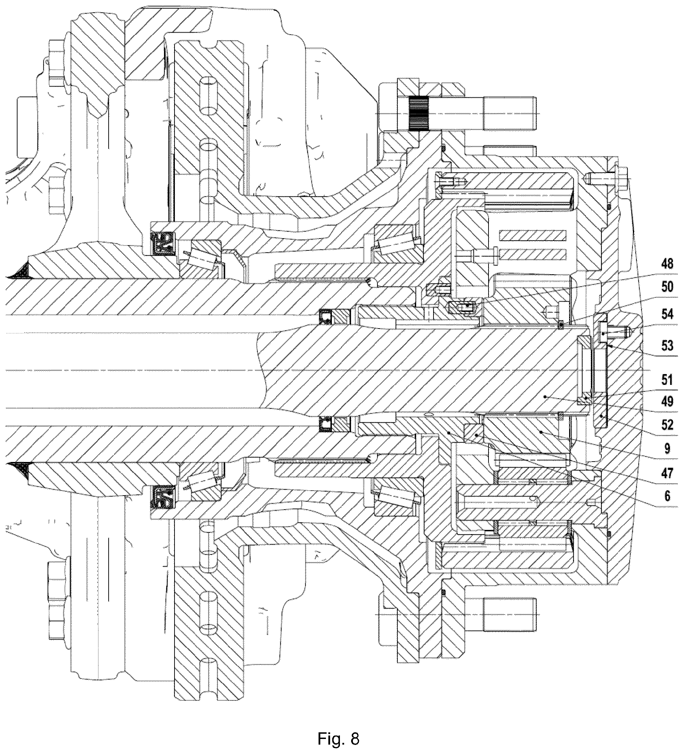

Fig. 8 shows the hub reduction unit of an axle according to the invention, in an embodiment of an unsteered axle with a disc brake and without a central tyre inflation system. In contrast to the steered axles, the unsteered axles have a first friction plate 47 mounted on the locking screw 6, secured against rotation by a fourth pin 48 which fits into an opening in the locking screw 6 and in the first friction plate 47. The first friction plate 47 is in contact with the hub reduction central gear 9 and forms its internal axial stop. The hub reduction central gear 9 is connected via a spline to the drive shaft 49 (corresponding to the input shaft 10) and is secured externally by a retaining ring 50. In contrast to the steered axles, the axial clearance on the unsteered axles is not defined, but a defined axial clearance is established between the shaft stopper 51 press-fitted in the drive shaft 49 (or in the input shaft 10) and the second friction plate 52 arranged in the hub reduction cover 39. There are distancing shims 53 inserted under the second friction plate 52, wherein the distancing shims 53 are used to set a specified axial clearance. Rotation of the second friction plate 52 is prevented by means of screws 54 screwed into the hub reduction cover 39, wherein heads of the screws 54 engage the openings in the second friction plate 52. The friction plate 52 is centred by the inner cylindrical protrusion 39c of the hub reduction cover 39, in the form of a non-through cylindrical opening arranged in the centre of the hub reduction cover 39.

### Example 4

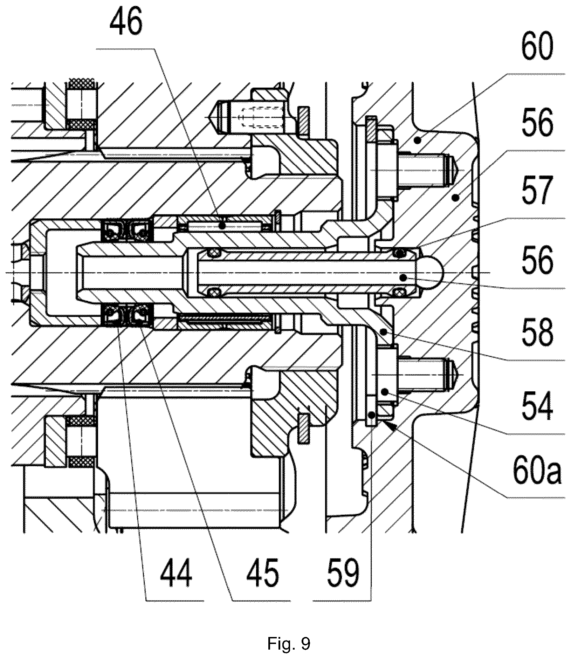

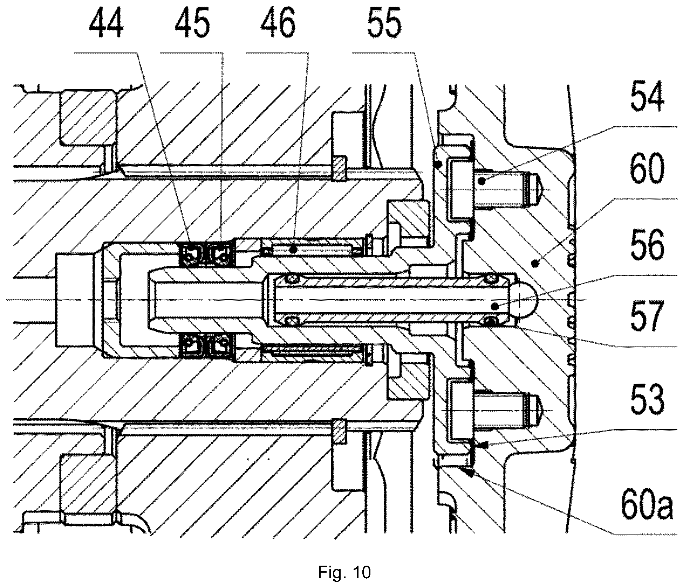

Fig. 9 and 10 show an embodiment of a central tyre inflation system (variant 2), in which a hub reduction cover 60 comprises also a central bore and an inner cylindrical protrusion 60a, in which protrusion a rear axle tyre inflation hub 55 (Fig. 10), or a front axle tyre inflation hub 58 (Fig. 9) is centred. The inflation hub 55, 58 engages with the first and second seal 44, 45, and also with the radial bearing 46. So as to prevent turning, the inflation hub 55, 58 comprises openings which receive screws 54 during assembly, which screws 54 are screwed into the hub reduction cover 60. The inflation hub 55, 58 comprises a central bore for air passage as well as a bore for receiving a biball tapered element 56, sealed on both ends with an O-ring 57.

In an embodiment of an unsteered axle (Fig. 10), axial clearance is set during assembly by means of distancing shims 53, inserted for the rear axle tyre inflation hub 55.

In an embodiment of a steered axle (Fig. 9), there is no need to set axial clearance because the input shaft 10 is axially fixed, therefore the front axle tyre inflation hub 58 is secured in an axial direction with a retaining ring 59.

The inflation hub 55, 58 in both embodiments rotates together with the hub reduction cover 60 and with the biball tapered element 56 arranged inside.

### Industrial applicability

The above-described hub reduction unit of an axle can be used in trucks.

### List of reference signs

- 1: knuckle
- 1a: spline of the knuckle or the half-axle
- 2: first bearing
- 3: second bearing
- 4: planet carrier
- 5: wheel hub
- 5a: centring diameter of the wheel hub 5
- 6: locking screw
- 7: first locking pin of the locking screw 6
- 8: shaped shim of the locking screw 6
- 9: hub reduction central gear
- 10: input shaft
- 10a: spline of the input shaft 10
- 11: needle bearing
- 12: sleeve of the input shaft 10
- 13: shaft seal
- 14: retaining ring
- 15: hub reduction pinion
- 16: needle
- 17: spacer ring
- 18: shim of the hub reduction pinion 15
- 19: third pin of the shim 18
- 20: hub reduction pinion pin
- 20a: cut-out of the pin 20
- 20b: inner cylindrical hole of the planet carrier 38
- 21: retaining plate
- 22: screw of the retaining plate 21
- 23: outer ring gear according to prior art
- 24: hub reduction cover according to prior art
- 25: stopper
- 26: distancing shim
- 27: screw of the hub reduction cover 24 according to prior art
- 28: outer ring gear holder
- 28a: spline of the holder 28
- 29: outer ring gear according to the invention
- 30: screw of the retaining plate 31 according to the invention
- 31: retaining plate according to the invention
- 32: first axial bearing
- 33: second axial bearing
- 34: cassette seal
- 35: locking nut
- 36: second locking pin of the locking nut 35
- 37: retaining ring of the locking nut 35
- 38: planet carrier
- 39: hub reduction cover according to the invention, variant 1
- 39a: outer cylindrical protrusion of the hub reduction cover 39
- 39b: additional outer cylindrical protrusion of the hub reduction cover 39
- 39c: inner cylindrical protrusion of the hub reduction cover 39
- 40: screw of the hub reduction cover 39 according to the invention
- 41: brake disc
- 42: wheel bolt
- 43: tyre inflation pin
- 44: first seal
- 45: second seal
- 46: radial bearing
- 47: first friction plate
- 48: fourth pin
- 49: drive shaft
- 50: retaining ring of the hub reduction central gear 9
- 51: stopper of the drive shaft 49
- 52: second friction plate
- 53: distancing shim for the second friction plate 52
- 54: screw for the second friction plate 52
- 55: rear axle tyre inflation hub
- 56: biball tapered element
- 57: O-ring
- 58: front axle tyre inflation hub
- 59: retaining ring
- 60: hub reduction cover according to the invention, variant 2
- 60a: inner cylindrical protrusion of hub reduction cover 60

## Claims

1. A hub reduction unit of an axle, comprising a planetary gearbox and an input shaft (10), a knuckle (1) or a half-axle, and a wheel hub (5), all mechanically connected to the planetary gearbox, wherein the planetary gearbox comprises a hub reduction central gear (9), at least two hub reduction pinions (15) pivotally arranged on hub reduction pinion pins (20) and in engagement with the hub reduction central gear (9), and an outer ring gear (29) in engagement with the hub reduction pinions (15), wherein the input shaft (10) is mechanically connected via the hub reduction central gear (9) to the hub reduction pinions (15) and to the outer ring gear (29), wherein proximal to the plane of the planetary gearbox means towards the drive and distal to the plane of the planetary gearbox means towards the wheel, the plane of the planetary gearbox being the plane of the hub reduction central gear (9) perpendicular to the rotational axis of the hub reduction central gear (9), **characterised in that** the outer ring gear (29) is mechanically connected to an outer ring gear holder (28) and to the knuckle (1) or the half-axle for capturing reaction forces of the hub reduction unit, wherein the outer ring gear holder (28) and the knuckle (1) or the half-axle are arranged proximal to the plane of the planetary gearbox and arranged externally with respect to the input shaft (10) and co-axially with the input shaft (10), and **in that** the planetary gearbox further comprises a planet carrier (38) rigidly connected to the hub reduction pinion (15) pins (20) and further to the wheel hub (5) such that the wheel hub (5) is arranged proximal to the plane of the planetary gearbox, externally with respect to the outer ring gear holder (28) and the knuckle (1) or the half-axle on bearings (2, 3) and co-axially with the outer ring gear holder (28) and the knuckle (1) or the half-axle on the bearings (2, 3), wherein a first bearing (2) is mounted on the knuckle (1) or the half-axle and a second bearing (3) is mounted on the outer ring gear holder (28).

2. The hub reduction unit of an axle according to claim 1, **characterised in that** proximal to the plane of the planetary gearbox, externally with respect to the wheel hub (5) and co-axially with the wheel hub (5), a drum brake is mounted, wherein a brake plate and brake shoes are attached to the knuckle (1) or the half-axle, and a brake drum is attached to the wheel hub (5).

3. The hub reduction unit of an axle according to claim 1, **characterised in that** proximal to the plane of the planetary gearbox, externally with respect to the wheel hub (5) and co-axially with the wheel hub (5), a disc brake is mounted, wherein a brake plate and brake pads are attached to the knuckle (1) or the half-axle, and a brake disc is attached to the wheel hub (5).

4. The hub reduction unit of an axle according to any one of the preceding claims, **characterised in that** the planet carrier (38) is rigidly connected to a hub reduction cover (39) arranged distal to the plane of the planetary gearbox by means of a screw connection (40) between the planet carrier (38) and the hub reduction cover (39), wherein each pin (20) of the hub reduction pinion (15) has a cut-out (20a) and the hub reduction cover (39) comprises an outer cylindrical protrusion (39a) which fits into the cut-outs (20a).

5. The hub reduction unit of an axle according to claim 4, **characterised in that** the hub reduction cover (39) is substantially circular in shape and comprises the following cylindrical protrusions on the proximal side: an outer cylindrical protrusion (39a) for securing the hub reduction pinion pins (20) against rotation; an additional outer cylindrical protrusion (39b) for centring the hub reduction cover (39) in the planet carrier (38); and an inner cylindrical protrusion (39c) in the form of a non-through cylindrical hole arranged in the centre of the hub reduction cover (39), for centring a tyre inflation pin or a friction plate; wherein the outer cylindrical protrusion (39a) fits into the cut-outs (20a) in the hub reduction pinion pins (20) for securing the hub reduction pinion pins (20) against rotation.

6. The hub reduction unit of an axle according to any one of the preceding claims, **characterised in that** the input shaft (10) is distally terminated with a locking nut (35) for defining axial clearance of the input shaft (10).

7. The hub reduction unit of an axle according to claim 6, **characterised in that** the locking nut (35) and the hub reduction central gear (9) comprise correspondingly facing openings into which a second locking pin (36) is inserted, wherein a retaining ring (37) is further arranged around the circumference of the locking nut (35).

8. The hub reduction unit of an axle according to any one of the preceding claims, **characterised in that** proximal to the plane of the planetary gearbox, co-axially with the input shaft (10) and between the input shaft (10) and the knuckle (1) or the half-axle with the outer ring gear holder (28), a locking screw (6) for axial adjustment of the bearings (2, 3) is arranged, wherein a head of the locking screw (6) engages the outer ring gear holder (28).

9. The hub reduction unit of an axle according to claim 8, **characterised in that** the head of the locking screw (6) and the outer ring gear holder (28) comprise correspondingly facing openings into which a first locking pin (7) is inserted.

10. The hub reduction unit of an axle according to claim 8 or 9, **characterised in that** the input shaft (10) is radially mounted in a needle bearing (11) arranged on the knuckle (1) and axially mounted in axial bearings (32, 33), wherein a first axial bearing (32) is arranged in the knuckle (1) and a second axial bearing (33) is arranged on the locking screw (6) such that it rolls along a face of the hub reduction central gear (9).

11. The hub reduction unit of an axle according to claim 8 or 9, **characterised in that** a first friction plate (47) is mounted between the locking screw (6) and the hub reduction central gear (9) for defining an internal axial stop of the hub reduction central gear (9), wherein an input shaft stopper (51) is mounted at a distal end of the input shaft (10), and a second friction plate (52) is mounted on the proximal side of the hub reduction cover (39), opposite the input shaft stopper (51), for setting a defined axial clearance of the input shaft (10).

12. The hub reduction unit of an axle according to any one of the preceding claims, **characterised in that** the hub reduction pinion (15) is pivotally mounted on loose needles (16) arranged in two rows on the hub reduction pinion pin (20), wherein the rows are separated by a spacer ring (17) and wherein the hub reduction pinion (15) is axially defined on each side by shims (18) secured by third pins (19).

13. The hub reduction unit of an axle according to any one of the preceding claims, **characterised in that** it further comprises a central tyre inflation system, wherein correspondingly facing central tyre inflation openings for the central tyre inflation pin are arranged in the hub reduction cover (39) and the input shaft (10).

14. The hub reduction unit of an axle according to any one of claims 1 to 12, **characterised in that** it further comprises a central tyre inflation system, wherein a hub reduction cover (60) comprises a central bore and an inner cylindrical protrusion (60a), in which protrusion (60a) a rear axle tyre inflation hub (55) or a front axle tyre inflation hub (58) is centred.
